(19) **Europäisches Patentamt / European Patent Office / Office européen des brevets**

(11) **EP 2 426 931 A1**

(12) **EUROPEAN PATENT APPLICATION**

(43) Date of publication:
**07.03.2012 Bulletin 2012/10**

(51) Int Cl.:
**H04N 13/00** $^{(2006.01)}$

(21) Application number: **10175505.6**

(22) Date of filing: **06.09.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Advanced Digital Broadcast S.A.**
**1292 Chambesy (CH)**

(72) Inventors:
• **Hrebien, Maciej**
  **65-119, Poland (PL)**
• **Kobzda, Piotr**
  **65-119, Poland (PL)**
• **Szajna, Tomasz**
  **65-119, Poland (PL)**

(74) Representative: **Pawlowski, Adam**
**Eupatent.PL**
**Al. Kosciuszki 23/25**
**90-418 Lodz (PL)**

Remarks:
Amended claims in accordance with Rule 137(2) EPC.

(54) **A method and a system for determining a video frame type**

(57) A computer-implemented method for determining a video frame type, comprising the steps of receiving a video frame, analyzing the video frame in at least one detector module (211, 212) using at least one algorithm configured to output a type coefficient (p) indicative of a probability that the frame is of a 2D or 3D type, wherein each of the detector modules (211, 212) utilizes at least one algorithm different than the algorithms utilized by the other detector modules (211, 212), generating a predicted frame type indicator based on the type coefficients (p).

Fig. 5

EP 2 426 931 A1

**Description**

The present invention relates to determining video frame type, in particular distinguishing between a two-dimensional (2D) and three-dimensional (3D) video frames.

Stereoscopic video displays can be used to display both 2D and 3D video signals, by processing the frames of the signals depending on the type of signal. The type of the signal can be specified manually by the user, which can be troublesome for inexperienced users. The type of signal can be also specified by supplementary data included in the signal itself or by a supplementary signal, which requires the video display unit to be able to decode and recognize the supplementary data or the supplementary signal.

A US patent application US2009/0009508 presents an apparatus and a method for driving a 2D/3D switchable display, which includes an image mode determination unit determining whether input image signals of continuous frames are in a 2D mode or 3D mode. The 3D mode is recognized by determining a syntax indicating a stereo or a multiview image included in the header information of the input image signal. Alternatively, the image mode can be determined based on the presence of a stereo sync signal. Therefore, the mode determination requires data or signals supplementary to the basic image data.

A PCT patent application WO2010/014973 presents a method and an apparatus for encoding or tagging a video frame which provide a way to indicate, to a receiver, whether the video content is 3-D content or 2-D content, by replacing lines of at least one video frame in a 3-D content with a specific color or pattern. Therefore, the method is useful only for receivers, which are able to recognize the specific color or patterns as an indication of a 3-D content.

In case the display lacks the functionality of decoding supplementary data included in the signal or is not able to decode supplementary signals describing the video type, or the video signal contains only basic image contents without the image type indicated, the signal must be recognized in an alternative way.

The aim of the present invention is to provide a method for determining the video frame type by analyzing video signals having no or unknown indication of video frame type.

The object of the invention is a computer-implemented method for determining a video frame type, comprising the steps of receiving a video frame, analyzing the video frame in at least one detector module using at least one algorithm configured to output a type coefficient indicative of a probability that the frame is of a 2D or 3D type, wherein each of the detector modules utilizes at least one algorithm different than the algorithms utilized by the other detector modules, generating a predicted frame type indicator based on the type coefficients.

A compacted frame can be generated by discarding the non-active regions of the received video frame and/or scaling down and/or discarding color information and provided for analyzing.

In at least one detector module a type coefficient indicative of a probability that the frame is of a 2D type and a type coefficient indicative of a probability that the frame is of a 3D type can be output.

In at least one detector module a type coefficient indicative of a probability that the frame is of an Left-Right (LR) 3D type and a type coefficient indicative of a probability that the frame is of a Top-Bottom (TB) 3D type can be output.

In at least one detector module a type coefficient indicative of a probability that the frame is of a 2D type can be output as equal to the inverse of the larger of the type coefficients indicative of a probability that the frame is of a 3D type.

The video frame can be received upon a change of an input video signal,

The video frame can be received with a predetermined frequency.

The video frame can be received upon a change of the output frame type indicator.

The frame type indicator can be output upon detecting a change of the frame type indicator for a plurality of consecutive video frames.

Another object of the invention is a computer program comprising program code means for performing all the steps of the computer-implemented method when said program is run on a computer, as well as a computer readable medium storing computer-executable instructions performing all the steps of the computer-implemented method when executed on a computer.

The object of the invention is also a system for determining a video frame type, which comprises a buffer configured to receive a video frame, a plurality of frame type detectors configured to read the video frame received in the buffer and to analyze the frame using at least one algorithm configured to output a type coefficient indicative of a probability that the frame is of a 2D or 3D type, wherein each of the detectors utilizes at least one algorithm different than the algorithms utilized by the other detectors, a controller configured to receive the type coefficients from the frame type detectors and to generate a predicted frame type indicator based on the received type coefficients.

The system may further comprise frame compactor configured to receive a video frame, generate a compacted frame by discarding the non-active regions of the video frame and/or scaling-down the video frame and/or discarding color information and output the compacted frame to the buffer.

At least one detector can be configured to output a type coefficient indicative of a probability that the frame is of a 2D type and a type coefficient indicative of a probability that the frame is of a 3D type.

At least one detector can be configured to output a type coefficient indicative of a probability that the frame is of an Left-Right (LR) 3D type and a type coefficient indicative of a probability that the frame is of a Top-Bottom (TB) 3D type.

At least one detector can be configured to output a type coefficient indicative of a probability that the frame is of a 2D type equal to the inverse of the larger of the type coefficients indicative of a probability that the frame is of a 3D type.

The buffer can be configured to receive the video frame upon a change of a video signal input to the system.

The buffer can be configured to receive the video frame with a predetermined frequency.

The buffer can be configured to receive the video frame upon a change of the frame type indicator output by the controller.

The controller can be configured to output a frame type indicator upon detecting a change of the frame type indicator for a plurality of consecutive video frames.

The present invention will be shown by means of an exemplary embodiment on a drawing, in which:

> Figs. 1A-1D show examples of typical 2D video frames.
> Figs. 2A-2H show examples of typical 3D video frames of an Left-Right (LR) type.
> Figs. 3A-3H show examples of typical 3D video frames of a Top-Bottom (TB) type.
> Fig. 4 shows the common non-active image regions of a video frame.
> Fig. 5 shows the structure of a system for determining video frame type.
> Fig. 6 shows the procedure of operation of a frame compactor.
> Fig. 7 shows the procedure of operation of a frame type detector.
> Fig. 8 shows the procedure of operation of a frame type controller.

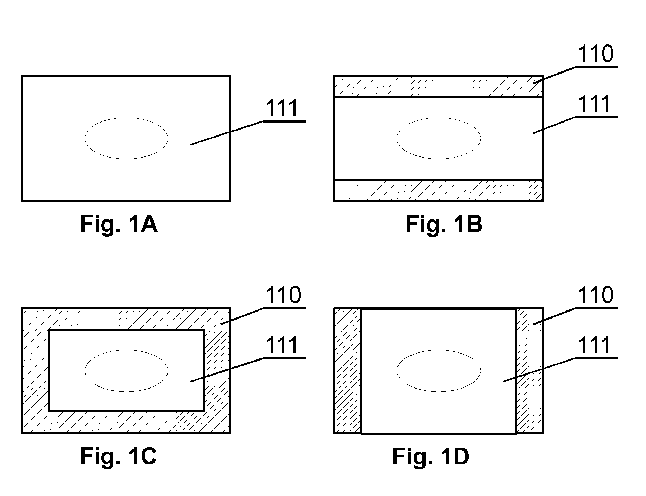

. Fig. 1A-1D show examples of typical 2D video frames. The frame may comprise only an active image region 111 as shown in Fig. 1A. Alternatively, the 2D frame may further comprise a non-active image region 110, such as bars of a uniform color, e.g. black, at the top and bottom edges of the frame as shown in Fig. 1B or bars at the top, bottom, left and right edges of the frame as shown in Fig. 1C or bars at the left and right edges of the frame as shown in Fig. 1D.

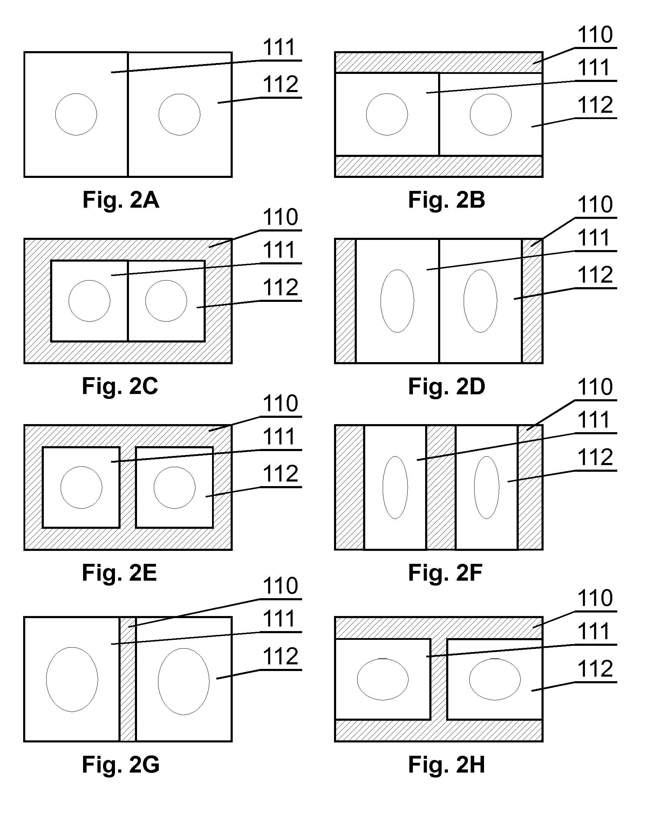

Figs. 2A-2H show examples of typical 3D video frames of a Left-Right (LR) type. Such frame, as shown in Fig. 2A, comprises two active image regions 111, 112, which define the content to be displayed for the left and right eye. The active regions 111, 112 may be scaled-down in the horizontal direction in order to fit into dimensions of a standardized 2D frame. A 3D frame may also contain non-active image regions 110, such as bars of a uniform color, e.g. black, at the top and bottom edges of the frame as shown in Fig. 2B, at the top, bottom, left and right edges of the frame as shown in Fig. 2C, at the left and right edges of the frame as shown in Fig. 2D, at the top, bottom, left and right edges of the frame and between the active regions as shown in Fig. 2E, at the left and right edges of the frame and between the active regions as shown in Fig. 2F, between the active regions as shown in Fig. 2G or at the top and bottom edges of the frame and between the active regions as shown in Fig. 2H.

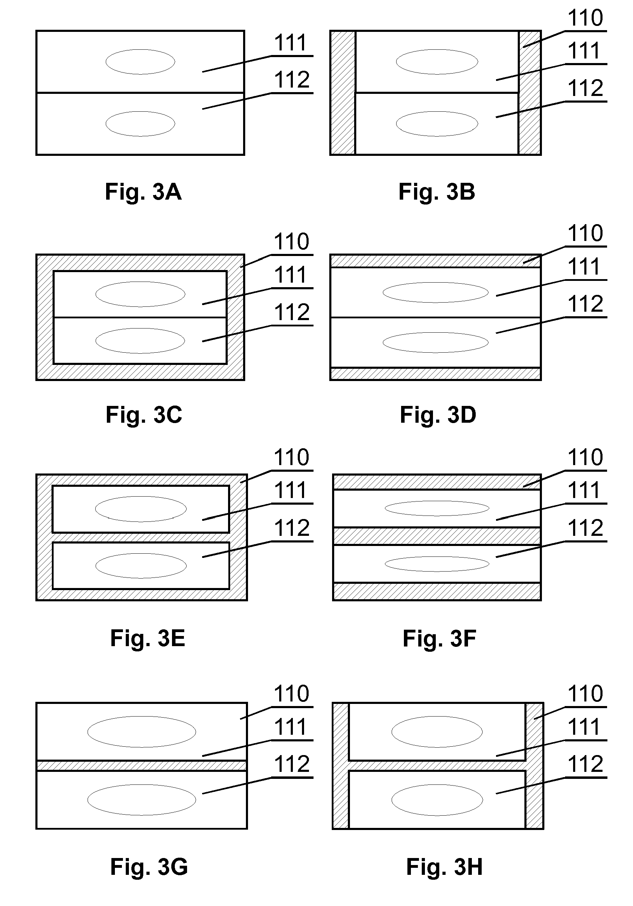

Figs. 3A-3H show examples of typical 3D video frames of a Top-Bottom (TB) type. Such frame, as shown in Fig. 3A, comprises two active image regions 111, 112, which define the content to be displayed for the left (e.g. the top region) and the right (e.g. the bottom region) eye. The active regions 111, 112 may be scaled-down in the vertical direction in order to fit into dimensions of a standard 2D frame. A 3D frame may also contain non-active image regions 110, such as: bars of a uniform color, e.g. black, at the left and right edges of the frame as shown in Fig. 3B, at the top, bottom, left and right edges of the frame as shown in Fig. 3C, at the top and bottom edges of the frame as shown in Fig. 3D, at the top, bottom, left and right edges of the frame and between the active regions as shown in Fig. 3E, at the top and bottom edges of the frame and between the active regions as shown in Fig. 3F, between the active regions as shown in Fig. 3G or at the left and right edges of the frame and between the active regions as shown in Fig. 3H.

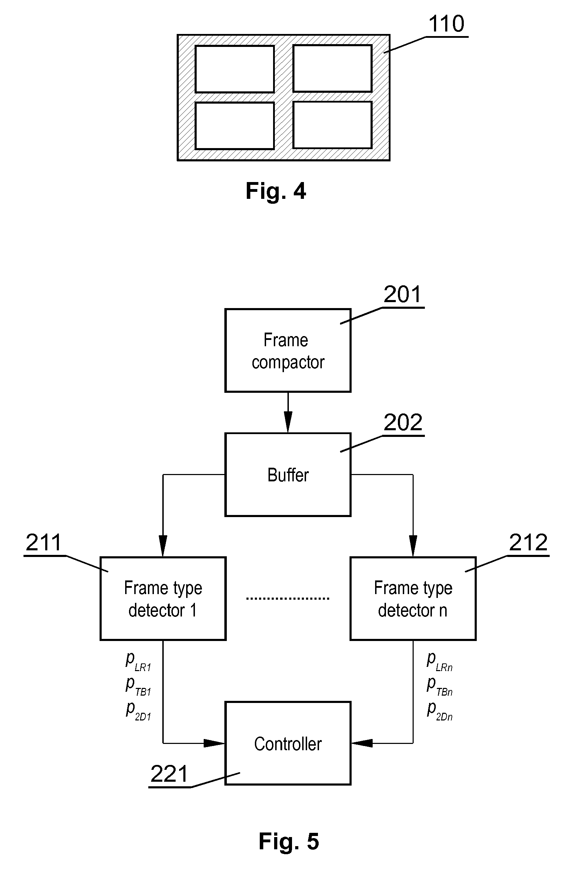

Therefore, for any 2D or 3D video frame, the most probable non-active regions 110 may form bars at the top, bottom, left, right, horizontal centre and vertical centre of the frame, as shown in Fig. 4.

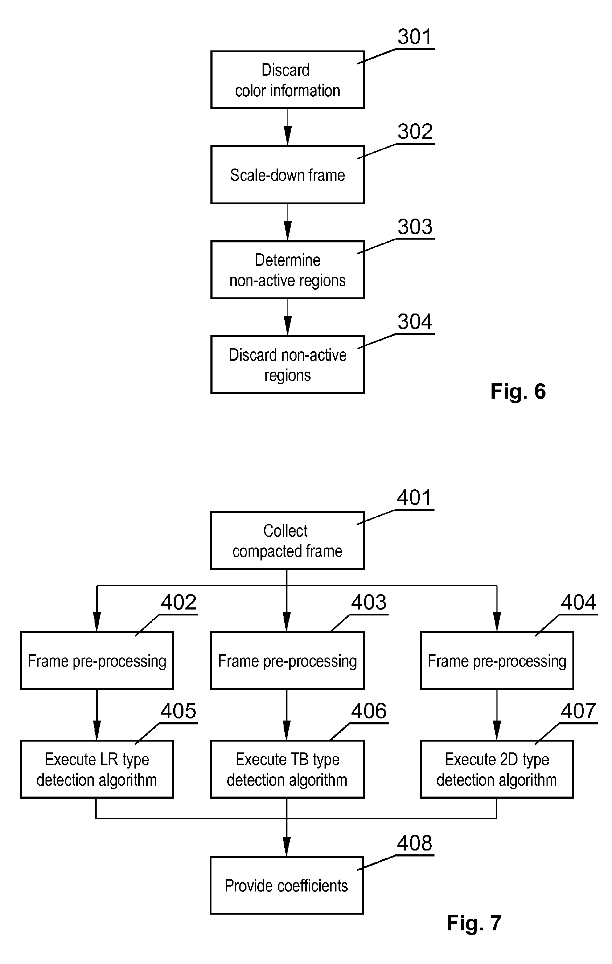

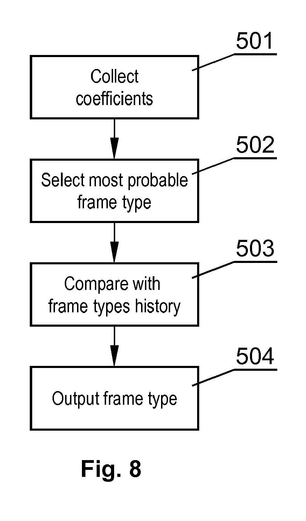

Fig. 5 shows the structure of a system for determining video frame type according to the invention. The system comprises a frame compactor 201 configured to extract from the input video frames data representing an active region and discard the data representing the non-active region of the frame, according to the procedure shown in Fig. 6, and possibly to reduce the amount of data by scaling-down and/or discarding the color information. The reduced frame representation is passed to a buffer 202, from which it is collected by a plurality of frame type detectors 211, 212, each utilizing a different frame type detection algorithm and operating according to the procedure shown in Fig. 7 Each frame type detector 211, 212 provides an output in form of coefficients p, indicative of a probability that the frame is a 2D $(P_{2D})$ or a 3D frame, wherein for 3D frames the detector may indicate the type of frame: an LR frame $(P_{LR})$ or a TB frame $(P_{TB})$. The coefficients are collected by a frame type controller 221, operating according to the procedure shown in Fig. 8 and configured to output the predicted frame type indicator.

Fig. 6 shows the procedure of operation of the frame compactor 201. In step 301, the received input frame may be reduced for easier analysis, by scaling it down, i.e. reducing the size of the frame. Next, in step 302 the color information can be discarded, either by converting the frame contents into a grayscale or selecting contents of only one color channel. Next, in step 303 the frame is analyzed to detect the non-active regions, preferably in areas indicated in Fig. 4, namely in the bars located at the top, bottom, left, right, horizontal centre and vertical centre of the frame. The contents of the detected non-active regions are discarded in step 304 so as to generate a frame containing only data of active regions, as shown in Fig. 1A, 2A or 3A. The processing of a frame by the frame compactor 201 may be initiated after a change of the video input signal, for example a change of a channel in a television decoder, in order to determine the type of the new signal. Alternatively, the frame compactor 201 may be operated continuously, in order to detect change of type of the received signal, for example to detect a 2D commercial break in a 3D video film. In such a case, the frame compactor 201 may receive the frames with a specific frequency, preferably lower than the frame display rate, such as 2 frames per second, in order to minimize the computational load of the signal receiver.

Fig. 7 shows the procedure of operation of the frame type detector 211, 212. A compacted frame is collected from the buffer 202 in step 401. Next, in steps 402, 403, 404 it can be pre-processed in order to adapt it to a following type-recognition algorithm. The pre-processing steps 402-404 may be performed for each algorithm individually, or if the algorithms require the same pre-processing, the pre-processing step can be executed once for all algorithms. Pre-processing may include filtering, normalization, Fourier transformations etc. In steps 405, 406, 407 the algorithms for detecting whether the frame is of a 3D LR type, a 3D TB type or a 2D type are executed. In a simple embodiment, the 2D type detection algorithm may be not used. The algorithms are different for each frame type detector 211, 212. Preferably, the algorithms used are of various types, such as determining the phase correlation between two frame halves, subtracting the frame halves, multiplying the frame halves, etc. The algorithms are configured to provide a coefficient indicative of the probability that the frame is of a given type. In case the 2D type detection algorithm is not used, the coefficient for indicating a 2D frame can be calculated as the inverse of the larger of the 3D coefficients:

$$p_{2D} = 1 - Max\ (p_{LR};\ p_{TB})$$

Some algorithms may provide inaccurate results for particular types of frame contents, such as large areas of the same colour, therefore the coefficients $P_{2D}$, $P_{LR}$, $P_{TB}$ (preferably indicated as a number from 0 to 1) do not have to sum up to 1. The calculated set of coefficients is output in step 408.

Fig. 8 shows the procedure of operation of the frame type controller 221. In step 501, the coefficients are collected from the detectors 211, 212. For example, the following sets of coefficients may be collected:

|  | $P_{LR}$ | $P_{TB}$ | $P_{2D}$ |
|---|---|---|---|
| Detector 1 | 0,9 | 0,1 | 0,1 |
| Detector 2 | 0,8 | 0,1 | 0,2 |
| Detector 3 | 0,5 | 0,5 | 0,5 |
| Detector 4 | 0,1 | 0,1 | 0,1 |

In other embodiments, not all detectors have to provide coefficients for all frame types.

As indicated in the table, detectors 1 and 2 determined the frame as a 3D LR-type frame. The algorithms of detector 3 indicated inability to determine the type of frame. None of the algorithms of detector 4 recognized the frame as matching a specific type. By using a plurality of detectors, each using a different set of frame type detection algorithms, it is possible to correctly determine a wide range of frame types, which are not always detectable by a particular algorithm.

In step 502, the most probable frame type is selected. In addition, in step 503 the frame type may be compared with a history for e.g. the last 5 analyzed frames, in order to limit accidental, incorrect frame type changes. For example, the frame type may be changed only if the frame type was selected as a given type for the past 3 analyzed frames. Although this may delay the time of frame type change, such approach reduces the risk of accidental, incorrect frame type detections in case inaccurate algorithms are used. In step 504, the determined frame type is output. In order to minimize the delay related to low-pass filtering of the history of coefficients in case the detectors 211, 212 analyze frames with frequency lower than the frame rate, then in case a frame type change is detected, the detectors 211, 212 may be ordered to analyze the next possible frame, thereby to operate with a higher frequency at the moment of predicted frame change.

In case the system according to the invention is embedded in a video display unit, the determined frame type can be used to select the method of processing the signal to be displayed. In case the system according to the invention is embedded in a video decoder, such as a television set-top box, the determined frame type can be used to select the method of processing the signal to be passed to a display unit, for example converting a 2D signal to a 3D format in case the display unit is set to receive 3D video signals.

It can be easily recognized, by one skilled in the art, that the aforementioned system and method for determining video frame type may be performed and/or controlled by one or more computer programs. Such computer programs are typically executed by utilizing the computing resources of a processing unit which can be embedded within various video signal receivers, such as personal computers, personal digital assistants, cellular telephones, receivers and decoders of digital television, video display units or the like. The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

**Claims**

1. A computer-implemented method for determining a video frame type, **characterized in that** it comprises the steps of:

   - receiving a video frame,
   - analyzing the video frame in at least one detector module (211, 212) using at least one algorithm configured to output a type coefficient (p) indicative of a probability that the frame is of a 2D or 3D type, wherein each of the detector modules (211, 212) utilizes at least one algorithm different than the algorithms utilized by the other detector modules (211, 212),
   - generating a predicted frame type indicator based on the type coefficients (p).

2. The method according to claim 1, further comprising the step of generating a compacted frame by discarding the non-active regions (110) of the received video frame and providing the compacted frame for analyzing.

3. The method according to any of previous claims, further comprising the step of generating a compacted frame by scaling-down the video frame and providing the compacted frame for analyzing.

4. The method according to any of previous claims, further comprising the step of generating a compacted frame by discarding color information of the video frame and providing the compacted frame for analyzing.

5. The method according to any of previous claims, wherein in at least one detector module (211, 212) a type coefficient indicative of a probability that the frame is of a 2D type ($P_{2D}$) and a type coefficient indicative of a probability that the frame is of a 3D type $(P_{LR}, P_{TB})$ is output.

6. The method according to any of previous claims, wherein in at least one detector module (211, 212) a type coefficient indicative of a probability that the frame is of an Left-Right (LR) 3D type ($P_{LR}$) and a type coefficient indicative of a probability that the frame is of a Top-Bottom (TB) 3D type ($P_{TB}$) is output.

7. The method according to claim 6, wherein in at least one detector module (211, 212) a type coefficient indicative of a probability that the frame is of a 2D type ($P_{2D}$) is output as equal to the inverse of the larger of the type coefficients indicative of a probability that the frame is of a 3D type $(P_{LR}, P_{TB})$.

8. The method according to any of previous claims, wherein the video frame is received upon a change of an input video signal.

9. The method according to any of previous claims, wherein the video frame is received with a predetermined frequency.

10. The method according to any of previous claims, wherein the video frame is received upon a change of the output frame type indicator.

11. The method according to any of previous claims, wherein the frame type indicator is output upon detecting a change of the frame type indicator for a plurality of consecutive video frames.

12. A computer program comprising program code means for performing all the steps of the computer-implemented method according to any of claims 1-11 when said program is run on a computer.

13. A computer readable medium storing computer-executable instructions performing all the steps of the computer-implemented method according to any of claims 1-11 when executed on a computer.

14. A system for determining a video frame type, **characterized in that** it comprises:

   - a buffer (202) configured to receive a video frame,
   - a plurality of frame type detectors (211, 212) configured to read the video frame received in the buffer (202) and to analyze the frame using at least one algorithm configured to output a type coefficient (p) indicative of a probability that the frame is of a 2D or 3D type, wherein each of the detectors (211, 212) utilizes at least one algorithm different than the algorithms utilized by the other detectors (211, 212),
- a controller (221) configured to receive the type coefficients (p) from the frame type detectors (211, 212) and to generate a predicted frame type indicator based on the received type coefficients (p).

**15.** The system according to claim 14, further comprising a frame compactor (201) configured to receive a video frame, generate a compacted frame by discarding the non-active regions (110) of the video frame and output the compacted frame to the buffer (202).

**Amended claims in accordance with Rule 137(2) EPC.**

**1.** A computer-implemented method for determining a video frame type, **characterized in that** it comprises the steps of:

- receiving a video frame,
- analyzing the video frame in a plurality of frame type detectors (211, 212) using at least one algorithm configured to output a plurality of type coefficients ($p_{LR}$, $p_{TB}$, $p_{2D}$) indicative of a probability that the frame is of a 2D or 3D type, wherein at least two of the coefficients ($p_{LR}$, $p_{TB}$, $p_{2D}$) are calculated independently of each other and wherein the sum of the probability coefficients can be different than 100%, wherein each of the frame type detectors (211, 212) utilizes at least one algorithm different than the algorithms utilized by the other frame type detectors (211, 212), and wherein the frame type detectors (211, 212) operate in parallel,
- generating a predicted frame type indicator based on the type coefficients (p).

**2.** The method according to claim 1, further comprising the step of generating a compacted frame by discarding rectangular regions (110) located at the top, bottom, left, right, horizontal centre and/or vertical centre of the received video frame and providing the compacted frame for analyzing.

**3.** The method according to any of previous claims, further comprising the step of generating a compacted frame by scaling-down the video frame and providing the compacted frame for analyzing.

**4.** The method according to any of previous claims, further comprising the step of generating a compacted frame by discarding color information of the video frame and providing the compacted frame for analyzing.

**5.** The method according to any of previous claims, wherein in at least one frame type detector (211, 212) a type coefficient indicative of a probability that the frame is of a 2D type ($p_{2D}$) and a type coefficient indicative of a probability that the frame is of a 3D type ($p_{LR}$, $p_{TB}$) is output.

**6.** The method according to any of previous claims, wherein in at least one frame type detector (211, 212) a type coefficient indicative of a probability that the frame is of an Left-Right (LR) 3D type ($p_{LR}$) and a type coefficient indicative of a probability that the frame is of a Top-Bottom (TB) 3D type ($p_{TB}$) is output.

**7.** The method according to claim 6, wherein in at least one frame type detector (211, 212) a type coefficient indicative of a probability that the frame is of a 2D type ($p_{2D}$) is output as equal to the inverse of the larger of the type coefficients indicative of a probability that the frame is of a 3D type ($p_{LR}$, $p_{TB}$).

**8.** The method according to any of previous claims, wherein the video frame is received upon a change of an input video signal.

**9.** The method according to any of previous claims, wherein the video frame is received with a predetermined frequency.

**10.** The method according to any of previous claims, wherein the video frame is received upon a change of the output frame type indicator.

**11.** The method according to any of previous claims, wherein the frame type indicator is output upon detecting a change of the frame type indicator for a plurality of consecutive video frames.

**12.** A computer program comprising program code means for performing all the steps of the computer-implemented method according to any of claims 1-11 when said program is run on a computer.

**13.** A computer readable medium storing computer-executable instructions performing all the steps of the computer-implemented method according to any of claims 1-11 when executed on a computer.

**14.** A system for determining a video frame type, **characterized in that** it comprises:

- a buffer (202) configured to receive a video frame,
- a plurality of frame type detectors (211, 212) configured to read the video frame received in the buffer (202) and to analyze the frame using at least one algorithm configured to output a plurality of type coefficients ($p_{LR}$, $p_{TB}$, $p_{2D}$) indicative of a probability that the frame is of a 2D or 3D type, wherein at least two of the coefficients ($p_{LR}$, $p_{TB}$, $p_{2D}$) are calculated independently of each other and wherein the sum of the probability coefficients can be different than 100%, wherein each of the frame type detectors (211, 212) utilizes at least one algorithm different than the algorithms utilized by the other frame type detectors (211, 212), and wherein the frame type detectors (211, 212) are configured to operate in parallel,

- a controller (221) configured to receive the type coefficients ($p$) from the frame type detectors (211, 212) and to generate a predicted frame type indicator based on the received type coefficients ($p$).

**15.** The system according to claim 14, further comprising a frame compactor (201) configured to receive a video frame, generate a compacted frame by discarding rectangular regions (110) located at the top, bottom, left, right, horizontal centre and/or vertical centre of the video frame and output the compacted frame to the buffer (202).

111

**Fig. 1A**

110

111

**Fig. 1B**

110

111

**Fig. 1C**

110

111

**Fig. 1D**

111

112

**Fig. 2A**

110

111

112

**Fig. 2B**

110

111

112

**Fig. 2C**

110

111

112

**Fig. 2D**

110

111

112

**Fig. 2E**

110

111

112

**Fig. 2F**

110

111

112

**Fig. 2G**

110

111

112

**Fig. 2H**

Fig. 3A

Fig. 3B

Fig. 3C

Fig. 3D

Fig. 3E

Fig. 3F

Fig. 3G

Fig. 3H

110

**Fig. 4**

201

Frame
compactor

202

Buffer

211

Frame type
detector 1

212

Frame type
detector n

..................

$p_{LR1}$
$p_{TB1}$
$p_{2D1}$

$p_{LRn}$
$p_{TBn}$
$p_{2Dn}$

Controller

221

**Fig. 5**

301

Discard
color information

302

Scale-down frame

303

Determine
non-active regions

304

Discard non-active
regions

**Fig. 6**

401

Collect
compacted frame

402

Frame pre-processing

403

Frame pre-processing

404

Frame pre-processing

405

Execute LR type
detection algorithm

406

Execute TB type
detection algorithm

407

Execute 2D type
detection algorithm

408

Provide coefficients

**Fig. 7**

```
                                        501
        ┌─────────────────────┐ ╱
        │      Collect        │╱
        │    coefficients     │
        └─────────────────────┘
                   │
                   ▼                    502
        ┌─────────────────────┐ ╱
        │  Select most probable│╱
        │      frame type     │
        └─────────────────────┘
                   │
                   ▼                    503
        ┌─────────────────────┐ ╱
        │     Compare with    │╱
        │  frame types history│
        └─────────────────────┘
                   │
                   ▼                    504
        ┌─────────────────────┐ ╱
        │   Output frame type │╱
        │                     │
        └─────────────────────┘
```

**Fig. 8**

Europäisches
Patentamt

European
Patent Office

Office européen
des brevets

## EUROPEAN SEARCH REPORT

Application Number

EP 10 17 5505

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/182404 A1 (KUNO YOSHIKI [JP]) 22 July 2010 (2010-07-22) * paragraph [0090] - paragraph [0096]; figure 9 * ----- | 1-15 | INV. H04N13/00 |
| | | | TECHNICAL FIELDS SEARCHED (IPC) |
| | | | H04N |

The present search report has been drawn up for all claims

| Place of search | Date of completion of the search | Examiner |
|---|---|---|
| The Hague | 18 November 2010 | Wahba, Alexander |

EPO FORM 1503 03.82 (P04C01)

**EP 2 426 931 A1**

## ANNEX TO THE EUROPEAN SEARCH REPORT
## ON EUROPEAN PATENT APPLICATION NO.

EP 10 17 5505

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2010

| Patent document cited in search report | Publication date | Patent family member(s) | Publication date |
|---|---|---|---|
| US 2010182404 A1 | 22-07-2010 | WO 2010064448 A1 | 10-06-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090009508 A

- WO 2010014973 A